# EUROPEAN PATENT APPLICATION

(11) **EP 4 786 832 A1**
(43) Date of publication of application: **05.08.2026**
(21) Application number: 25869665.7
(22) Date of filing: 27.06.2025
(51) Int. Cl.: F16K 17/04, F24H 9/16, F24H 9/20

(54) **INTERNAL RELIEF VALVE CORE OF SAFETY VALVE, SAFETY VALVE AND WATER HEATER**

(30) Priority: 04.12.2024 CN 202423015122 U
(71) Applicant: Wuhu Midea Kitchen And Bath Appliances Mfg. Co, Ltd., Wuhu, Anhui 241009 (CN)
(72) Inventor: SHEN, Yongbing, Wuhu, Anhui 241009 (CN); WANG, Lili, Wuhu, Anhui 241009 (CN); ZHAO, Renzhuang, Wuhu, Anhui 241009 (CN)
(74) Representative: RGTH
(86) International application number: PCT/CN2025/104952
(87) International publication number: WO 2026/118428

(57) **Abstract**

Provided are an internal relief valve core of a safety valve, a safety valve, and a water heater. The internal relief valve core of the safety valve includes a valve seat (10), a valve spool (20), a first reset member (30), and a limit member (40). The valve seat (10) has a pressure relief orifice (11). The valve spool (20) is movable along an axis of the pressure relief orifice (11) to open or close the pressure relief orifice (11). The first reset member (30) has an elastic force that drives the valve spool (20) to close the pressure relief orifice (11). The limit member (40) is configured to guide the valve spool (20) to move along the axis of the pressure relief orifice (11).

## Description

### CROSS-REFERENCE TO RELATED APPLICATION

This application claims priority to Chinese Patent Application No. 202423015122.6, titled "INTERNAL RELIEF VALVE CORE OF SAFETY VALVE, SAFETY VALVE, AND WATER HEATER" and filed on December 04, 2024, the entire disclosure of which is incorporated herein by reference.

### FIELD

The present invention relates to the field of valve body technologies, and in particular, to an internal relief valve core, a safety valve, and a water heater.

### BACKGROUND

Existing electric water heaters are typically provided with a safety valve structure. During heating, as a pressure in an inner tank of the electric water heater rises and reaches an internal relief pressure opening threshold, an internal relief channel is opened. When a safety valve releases the pressure, a valve spool is prone to vibration under a fluid pressure, which can thus induce vibration noise, thereby affecting user experience.

### SUMMARY

The present invention aims to solve one of the technical problems in the related art at least to some extent. To this end, one object of the present invention is to provide an internal relief valve core of a safety valve.

Another object of the present invention is to provide a safety valve. The safety valve comprises the aforementioned internal relief valve core.

Yet another object of the present invention is to provide a water heater. The water heater comprises the aforementioned safety valve.

An internal relief valve core of a safety valve according to embodiments of the present invention comprises a valve seat, a valve spool, a first reset member, and a limit member. The valve seat has a pressure relief orifice. The valve spool is movable along an axis of the pressure relief orifice to open or close the pressure relief orifice. The first reset member has an elastic force that drives the valve spool to close the pressure relief orifice. The limit member is configured to guide the valve spool to move along the axis of the pressure relief orifice.

For the internal relief valve core of the safety valve according to the embodiments of the present invention, the valve spool can open or close the pressure relief orifice of the valve seat. By providing the limit member to guide the valve spool to move along the axis of the pressure relief orifice, vibration of the valve spool during the movement is reduced, thereby lowering noise of the internal relief valve core during a pressure relief and improving operating stability of the safety valve.

In addition, the internal relief valve core according to the above embodiments of the present invention may also have the following additional technical features.

Optionally, the limit member may be connected to the valve spool and slidably engaged with the valve seat along the axis of the pressure relief orifice.

Optionally, the valve seat may comprise a cylinder extending along the axis of the pressure relief orifice. The pressure relief orifice may be disposed at an inner side of an end of the cylinder, and the limit member may be movably disposed in the cylinder in an axial direction.

Optionally, the cylinder may have an inner circumferential surface comprising a first guide surface; and the limit member may have an outer circumferential surface comprising a second guide surface. The second guide surface may be movably disposed at an inner side of the first guide surface along the axis of the pressure relief orifice. The first guide surface may be a non-circular cylindrical surface, and the second guide surface may be a non-circular cylindrical surface adapted to the first guide surface; or the first guide surface may be a polygonal cylindrical surface, and the second guide surface may be a polygonal cylindrical surface adapted to the first guide surface; or a gap between the first guide surface and the second guide surface may be smaller than or equal to 1 mm; or the first guide surface may be disposed at another end of the cylinder.

Optionally, the limit member may comprise a positioning protrusion disposed at an outer side of the cylinder. The positioning protrusion protrudes from an inner circumferential surface of the cylinder and is opposite to another end of the cylinder in an axis direction of the pressure relief orifice.

Optionally, the limit member may be threadedly connected to the valve spool; and/or the limit member may be in clearance fit with the valve seat; and/or the limit member may be connected to the valve seat by a key.

Optionally, the limit member may be connected to the valve seat, and the valve spool may be slidably engaged with the limit member along the axis of the pressure relief orifice; or the limit member may be disposed between the valve seat and the valve spool, and the limit member may be slidably engaged with the valve seat and the valve spool along the axis of the pressure relief orifice.

Optionally, the valve spool may comprise a valve stem and a valve disc. The valve disc may be disposed at a side of the pressure relief orifice. The valve stem may be connected to the valve disc and pass through the pressure relief orifice and the valve seat. The limit member may cooperate with the valve stem and the valve seat to guide a movement of the valve spool.

Optionally, the valve seat may comprise a cylinder and an end plate. The end plate may cover an end of the cylinder. The pressure relief orifice may be formed at the end plate. A peripheral wall of the cylinder may have an internal relief channel through which an internal space of the cylinder is in communication with the pressure relief orifice.

Optionally, the valve spool may pass through the cylinder, and the limit member may be disposed at another end of the cylinder and configured to block at least part of the other end of the cylinder; and/or the cylinder may have a plurality of internal relief channels formed at the peripheral wall of the cylinder.

A safety valve according to embodiments of the present invention comprises a valve body, the aforementioned internal relief valve core, and a second reset member. The valve body has an internal relief chamber, and a connection port and an internal relief port that are in communication with the internal relief chamber. The internal relief valve core is disposed in the internal relief chamber and is configured to bring the connection port and the internal relief port to be in communication with each other or to isolate the connection port and the internal relief port from each other. The second reset member has an elastic force that drives the internal relief valve core to close the internal relief port.

Optionally, the valve body further has an external relief port in communication with the internal relief chamber, and the safety valve further comprises an external relief valve core configured to open or close the external relief port.

A water heater according to embodiments of the present invention comprises an inner tank and the aforementioned safety valve. The inner tank has a water storage chamber and a water inlet in communication with the water storage chamber. The connection port is connected to the water inlet.

### BRIEF DESCRIPTION OF THE DRAWINGS

FIG. 1 is a schematic view of an internal relief valve core according to an embodiment of the present invention.
FIG. 2 is a schematic cross-sectional view of an internal relief valve core according to an embodiment of the present invention.
FIG. 3 is an exploded view of an internal relief valve core according to an embodiment of the present invention.
FIG. 4 is a schematic view of a safety valve according to an embodiment of the present invention.
FIG. 5 is a schematic cross-sectional view of a safety valve according to an embodiment of the present invention.
FIG. 6 is a schematic cross-sectional view of a safety valve in the related art.

### Reference numerals:

safety valve 1000, internal relief valve core 100, valve seat 10, pressure relief orifice 11, cylinder 12, first guide surface 121, internal relief channel 122, end plate 13, valve spool 20, valve stem 21, valve disc 22, first reset member 30, limit member 40, second guide surface 41, positioning protrusion 42, buffer 50, valve body 200, internal relief chamber 210, connection port 220, internal relief port 230, external relief port 240, second reset member 300, external relief valve core 400.

### DETAILED DESCRIPTION OF THE EMBODIMENTS

The embodiments of the present invention will be described in detail below with reference to examples thereof as illustrated in the accompanying drawings, throughout which same or similar elements, or elements having same or similar functions, are denoted by same or similar reference numerals. The embodiments described below with reference to the drawings are illustrative only, and are intended to explain rather than limit the present invention.

In devices such as electric water heaters, heating a fluid in a system can cause a system pressure to rise. When a pressure in the system exceeds a safety limit, a safety valve needs to be mounted to release the pressure in the system to protect safety of the devices.

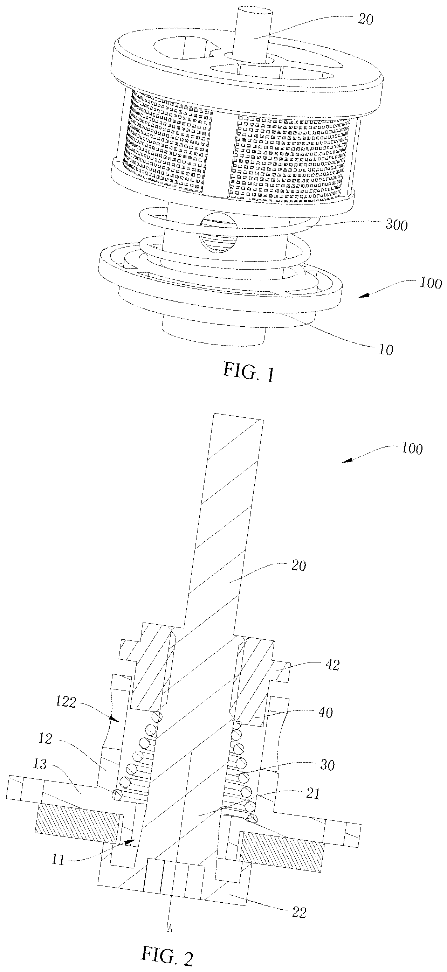

Referring to FIGS. 1 and 2, an internal relief valve core 100 according to an embodiment of the present invention may be applied in the safety valve. The internal relief valve core 100 comprises a valve seat 10 and a valve spool 20. The valve seat 10 has a pressure relief orifice 11. The valve spool 20 is movable along an axis of the pressure relief orifice 11 to open or close the pressure relief orifice 11. When the pressure in the system needs to be relieved, the pressure relief orifice 11 may be opened through the valve spool 20 to release the pressure in the system, thus maintaining stable operation of the system. Referring to FIG. 2, an axis of the pressure relief orifice 11 is A.

Referring to FIG. 2, the internal relief valve core 100 further comprises a first reset member 30 having an elastic force that drives the valve spool 20 to close the pressure relief orifice 11. Specifically, when the system pressure is smaller than or equal to a safety threshold, that is, when a system pressure value is normal, the first reset member 30 may drive the valve spool 20 to close the pressure relief orifice 11, and the safety valve 1000 may be in a closed and sealed state to prevent a medium in the system from flowing out. When the system pressure is greater than the safety threshold, the system pressure may overcome the elastic force of the first reset member 30 to drive the valve spool 20 to open the pressure relief orifice 11. Exemplarily, the first reset member 30 may be a spring.

Referring to FIG. 2 again, the internal relief valve core 100 further comprises a limit member 40 configured to guide the valve spool 20 to move along the axis of the pressure relief orifice 11. The limit member 40 can prevent the valve spool 20 from swinging in a radial direction of the pressure relief orifice 11 during a movement of the valve spool 20 to reduce vibration of the valve spool 20 during its movement. Thus, noise of the safety valve 1000 during its pressure relief can be lowered, and operating stability of the safety valve 1000 can be improved. Referring to FIG. 2, the axis of the pressure relief orifice 11 is A.

Exemplarily, the safety valve 1000 may have an internal relief channel. When the valve spool 20 closes and opens the pressure relief orifice 11, the fluid in the system flows at a high velocity in the internal relief channel, which can easily generate discrete pressure waves in the internal relief channel, thereby inducing noise caused by the vibration of the valve spool 20. By providing the limit member 40 to guide the valve spool 20 to move along an axis direction of the pressure relief orifice 11, the noise induced by the vibration of the valve spool 20 during the opening and closing of the pressure relief orifice 11 can be lowered.

For the internal relief valve core 100 according to the embodiments of the present invention, the valve spool 20 can open or close the pressure relief orifice 11 of the valve seat 10. By providing the limit member 40 to guide the valve spool 20 to move along the axis of the pressure relief orifice 11, the vibration of the valve spool 20 during its movement can be reduced. Thus, the noise of the internal relief valve core 100 during its pressure relief can be lowered, and the operating stability of the safety valve 1000 can be improved.

The internal relief valve core 100 of the present invention may be applied in equipment that requires control of an internal pressure of pipelines or devices, such as electric water heaters and air conditioning systems, to prevent an excessive pressure from affecting safe operation of the equipment. The water heater is taken as an example for illustration in the present invention.

Exemplarily, the internal relief valve core 100 may be applied in an electric water heater, which may comprise an inner tank. When a water pressure in the inner tank is higher than a tap water pressure at a water supply end and is greater than the pressure safety threshold, the water pressure in the inner tank may act on the valve spool 20 and overcome the elastic force of the first reset member 30 to drive the valve spool 20 to open the pressure relief orifice 11 to release the pressure in the inner tank. In this way, safety of the water heater can be improved. It can be understood that at a moment when the valve spool 20 opens and closes the pressure relief orifice 11, discrete pressure waves exist in the internal relief channel of the safety valve 1000, and a discrete internal relief pressure and the elastic force of the first reset member 30 are a pair of dynamic equilibrium forces interacting with each other, which can easily cause the vibration of the valve spool 20 during its movement, resulting in the noise from the safety valve 1000. For the internal relief valve core 100 of the present invention, by providing the limit member 40 to guide the valve spool 20 to move along the axis direction of the pressure relief orifice 11, movement stability of the valve spool 20 can be improved, preventing the valve spool 20 from vibrating and generating noise when subjected to a discrete water pressure from water flow. In this way, the operating stability of the safety valve 1000 can be improved.

The limit member 40 is configured to guide the valve spool 20 to move along the axis A of the pressure relief orifice 11. Exemplarily, the limit member 40 may be connected to the valve spool 20 and may be slidably engaged with the valve seat 10 along the axis of the pressure relief orifice 11; or the limit member 40 may be connected to the valve seat 10, and the valve spool 20 may be slidably engaged with the limit member 40 along the axis of the pressure relief orifice 11; or the limit member 40 may be disposed between the valve seat 10 and the valve spool 20, and the limit member 40 may be slidably engaged with both the valve seat 10 and the valve spool 20 along the axis of the pressure relief orifice 11. By providing the limit member 40 to guide the valve spool 20 to move along the axis direction of the pressure relief orifice 11, the swaying of the valve spool 20 along the radial direction of the pressure relief orifice 11 can be reduced, thereby improving the movement stability of the valve spool 20. Moreover, the vibration of the valve spool 20 during its movement can be reduced, thereby lowering the noise of the safety valve 1000 during its operation.

Referring to FIG. 2, in some embodiments of the present invention, the limit member 40 is connected to the valve spool 20 and slidably engaged with the valve seat 10 along the axis of the pressure relief orifice 11. In an embodiment, a position of the valve seat 10 is relatively fixed. When the pressure value in the system is greater than the safety threshold, the pressure in the system acts on the valve spool 20 and overcomes the elastic force of the first reset member 30 to drive the valve spool 20 to open the pressure relief orifice 11 while driving the limit member 40 to move. The limit member 40 is engaged with the valve seat 10 to facilitate the sliding of the limit member 40 along the axis direction of the pressure relief orifice 11. Thus, the sliding of the valve spool 20 along the axis direction of the pressure relief orifice 11 can be stably restricted, making the structure of the internal relief valve core 100 simple and improving the movement stability of the valve spool 20.

Exemplarily, a guide structure may be disposed between the limit member 40 and the valve spool 20, and the guide structure is configured to guide a movement of the limit member 40 to allow the limit member 40 to move along the axis of the pressure relief orifice 11.

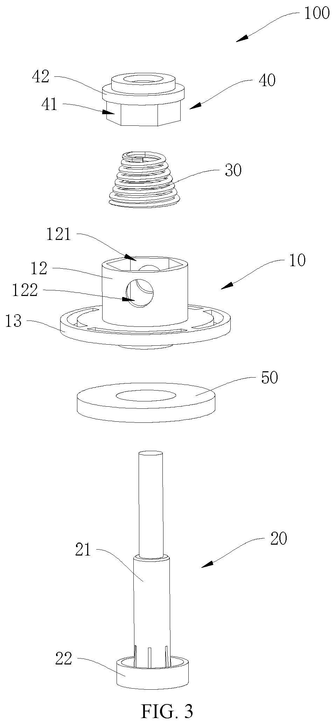

Referring to FIGS. 2 and 3, the valve seat 10 further comprises a cylinder 12 extending along the axis of the pressure relief orifice 11. The pressure relief orifice 11 is formed at an inner side of an end of the cylinder 12. The limit member 40 is movably disposed in the cylinder 12 in an axial direction. The cylinder 12 can limit a position of the limit member 40, improving stability of the limit member 40, thereby stably driving the valve spool 20 to move along the axis direction of the pressure relief orifice 11. In this way, reliability of the internal relief valve core 100 can be improved, and the noise of the safety valve 1000 during its pressure relief can be lowered.

Referring to FIG. 3, in some embodiments of the present invention, the cylinder 12 has an inner circumferential surface comprising a first guide surface 121, and the limit member 40 has an outer circumferential surface comprising a second guide surface 41. The second guide surface 41 is movably disposed at an inner side of the first guide surface 121 along the axis of the pressure relief orifice 11. The first guide surface 121 and the second guide surface 41 cooperate with each other to guide the movement of the limit member 40, improving movement stability of the limit member 40, and thus stably driving the valve spool 20 to move along the axis direction of the pressure relief orifice 11.

The first guide surface 121 and the second guide surface 41 may be designed as different structures.

In a first embodiment of the present invention, the first guide surface 121 is a non-circular cylindrical surface, and the second guide surface 41 is a non-circular cylindrical surface adapted to the first guide surface 121. Exemplarily, a cross-section of the cylinder 12 may be eccentrically circular, elliptical, etc. The first guide surface 121 and the second guide surface 41 are designed as the non-cylindrical surfaces, facilitating the movement of the limit member 40 along the axis direction of the pressure relief orifice 11 through the cylinder 12, and thus preventing the limit member 40 from shaking inside the cylinder 12 when the valve spool 20 is subjected to the fluid pressure.

In a second embodiment of the present invention, the first guide surface 121 is a polygonal cylindrical surface, and the second guide surface 41 is a polygonal cylindrical surface adapted to the first guide surface 121. Exemplarily, a cross-section of the cylinder 12 may be triangular, quadrilateral, pentagonal, hexagonal, etc. The first guide surface 121 and the second guide surface 41 are designed as the polygonal cylindrical surfaces, facilitating the movement of the limit member 40 along the axis direction through the cylinder 12, and thus avoiding the limit member 40 from shaking inside the cylinder 12 when the valve spool 20 is subjected to the fluid pressure. Furthermore, structural strength of the internal relief valve core 100 can be improved.

In some embodiments of the present invention, a gap between the first guide surface 121 and the second guide surface 41 is smaller than or equal to 1 mm, allowing the limit member 40 to move axially relative to the cylinder 12 while avoiding the gap between the first guide surface 121 and the second guide surface 41 being too large, which would otherwise cause the limit member 40 to shake inside the cylinder 12 when the valve spool 20 is impacted by the fluid.

Referring to FIGS. 2 and 3, in some embodiments of the present invention, the first guide surface 121 is disposed at another end of the cylinder 12, that is, the limit member 40 is located near the other end of the cylinder 12. In conjunction with the foregoing, the pressure relief orifice 11 is formed at the end of the cylinder 12, and the first guide surface 121 is disposed at the other end of the cylinder 12, which facilitates mounting of the internal relief valve core 100, and enables the limit member 40 to stably guide the valve spool 20 to move along the axis direction of the pressure relief orifice 11. As a result, the valve spool 20 can stably close and open the pressure relief orifice 11.

Exemplarily, during specific mounting of the internal relief valve core 100, the valve spool 20 may be first mounted onto the valve seat 10 from a lower end of the cylinder 12, and then the limit member 40 may be connected to the valve spool 20 from an upper end of the cylinder 12. The pressure relief orifice 11 is formed at an inner side of a lower end of the cylinder 12, which facilitates the opening and the closing of the pressure relief orifice 11 through the valve spool 20. The first guide surface 121 is disposed at an upper end of the cylinder 12, which facilitates the cooperation between the second guide surface 41 of the limit member 40 and the first guide surface 121 of the cylinder 12 to limit the movement of the valve spool 20, thereby improving the movement stability of the valve spool 20 and lowering the noise induced by the vibration of the valve spool 20 when being impacted by the fluid. The internal relief valve core 100 according to the embodiments of the present invention has a simple and reliable structure and is easy to mount.

Referring to FIGS. 2 and 3, in some embodiments of the present invention, the limit member 40 comprises a positioning protrusion 42 disposed at an outer side of the cylinder 12. The positioning protrusion 42 protrudes from an inner circumferential surface of the cylinder 12 and is opposite to another end of the cylinder 12 along an axis direction of the pressure relief orifice 11. The positioning protrusion 42 can limit the movement of the valve spool 20, preventing the valve spool 20 from disengaging from the valve seat 10 under the system pressure. In this way, structural stability of the internal relief valve core 100 is improved. In an embodiment, when the pressure in the system is greater than the safety threshold, the pressure in the system drives the valve spool 20 to move to open the pressure relief orifice 11. The positioning protrusion 42 may abut with an end surface of the cylinder 12, which can limit the valve spool 20 from continuing to move along the axis direction, thereby preventing the valve spool 20 from disengaging from the valve seat 10. In this way, the structural stability of the internal relief valve core 100 is improved.

In some embodiments of the present invention, the limit member 40 is threadedly connected to the valve spool 20, which facilitates fixing of the limit member 40 and the valve spool 20 to improve connection stability between the limit member 40 and the valve spool 20. Furthermore, subsequent replacement of components is facilitated.

In some embodiments of the present invention, the limit member 40 is in clearance fit with the valve seat 10, which facilitates mounting of the limit member 40 and the valve seat 10, and makes it easy for the engagement between the limit member 40 and the valve seat 10 to allow the limit member 40 to slide relative to the valve seat 10 in an axial direction.

In some embodiments of the present invention, the limit member 40 is connected to valve seat 10 by a key. Exemplarily, the limit member 40 may be provided with a flat key extending along the axis direction of the pressure relief orifice 11, and the valve seat 10 may be provided with a keyway at an inner side of the valve seat 10. The flat key is slidably disposed in the keyway, facilitating the guidance of the movement of the limit member 40 to improve the movement stability of the limit member 40. The limit member 40 is limited by the valve seat 10, facilitating the limit member 40 to guide the valve spool 20 to move stably along the axis direction of the pressure relief orifice 11, avoiding the valve spool 20 from swaying in the radial direction when being impacted by the fluid, and thus lowering the noise of the internal relief valve core 100 during its pressure relief.

In some other embodiments of the present invention, the limit member 40 is connected to the valve seat 10, and the valve spool 20 is slidably engaged with the limit member 40 along the axis of the pressure relief orifice 11. In an embodiment, the position of the valve seat 10 is relatively fixed, and the position of the limit member 40 relative to the valve seat 10 is also fixed. When the pressure value in the system is greater than the safety threshold, the pressure in the system acts on the valve spool 20. In this case, the limit member 40 can guide the movement of the valve spool 20 to drive the valve spool 20 to move along the axis A of the pressure relief orifice 11 to open and close the pressure relief orifice 11. As a result, the valve spool 20 is prevented from swaying under the action of the fluid pressure, which would otherwise induce the noise. Therefore, the structure of the internal relief valve core 100 is simplified, and the movement stability of the valve spool 20 is improved.

Exemplarily, the inner circumferential surface of the limit member 40 may comprise a third guide surface, and the outer circumferential surface of the valve spool 20 may comprise a fourth guide surface. The fourth guide surface is movably disposed at an inner side of the third guide surface along the axis of the pressure relief orifice 11.

In yet some other embodiments of the present invention, the limit member 40 is disposed between the valve seat 10 and the valve spool 20, and the limit member 40 is slidably engaged with the valve seat 10 and the valve spool 20 along the axis of the pressure relief orifice 11. In an embodiment, when the pressure value in the system is greater than the safety threshold, the pressure in the system overcomes the elastic force of the first reset member 30 and acts on the valve spool 20. In this case, the limit member 40 can guide the movement of the valve spool 20 to drive the valve spool 20 to move along the axis of the pressure relief orifice 11 to open and close the pressure relief orifice 11. As a result, the valve spool 20 is prevented from swaying under the action of the fluid pressure. Therefore, the structure of the internal relief valve core 100 is simplified, and the movement stability of the valve spool 20 is improved.

Referring to FIGS. 2 and 3, in some embodiments of the present invention, the valve spool 20 comprises a valve stem 21 and a valve disc 22. The valve disc 22 is disposed at a side of the pressure relief orifice 11. The valve stem 21 is connected to the valve disc 22 and passes through the pressure relief orifice 11 and the valve seat 10. The limit member 40 cooperates with the valve stem 21 and the valve seat 10 to guide the movement of the valve spool 20. In an embodiment, the valve stem 21 can drive the valve disc 22 to move to close and open the pressure relief orifice 11 through the valve disc 22. The limit member 40 cooperates with the valve stem 21 to guide the valve stem 21 to move along the axis direction of the pressure relief orifice 11, allowing the valve disc 22 to stably open and close the pressure relief orifice 11. At the same time, the valve seat 10 cooperates with the limit member 40 to ensure that the limit member 40 can stably guide the movement of the valve stem 21.

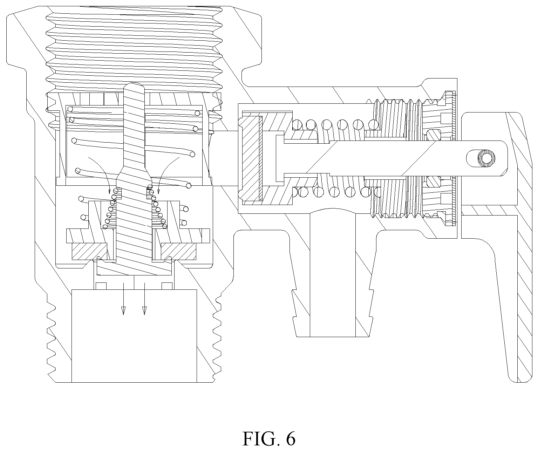

Referring to FIG. 6, the arrows indicate a pressure relief flow direction of the fluid within the safety valve in the related art. The internal relief channel has an inlet formed at a top. When a fluid pressure in the system rises and reaches an internal relief pressure threshold, an internal relief fluid rushes directly and passes through the internal relief channel at a high velocity, which can easily generate jet flow and induce noise.

Referring to FIGS. 2 and 3, in some embodiments of the present invention, the valve seat 10 comprises a cylinder 12 and an end plate 13. The end plate 13 covers an end of the cylinder 12, and the pressure relief orifice 11 is formed at the end plate 13. A peripheral wall of the cylinder 12 has an internal relief channel 122 through which an internal space of the cylinder 12 is in communication with the pressure relief orifice 11. After the pressure relief orifice 11 is opened by the valve spool 20, the system pressure may be relieved from the pressure relief orifice 11 through the internal relief channel 122. By providing the internal relief channel 122 at the peripheral wall of the cylinder 12, the pressure relief flow direction of the fluid is optimized. By changing an inlet direction of an internal relief fluid, a pressure and a flow rate of internal relief water are relieved, and flow-induced noise caused by an internal relief discrete pressure is changed. Further, the noise of the safety valve 1000 during its pressure relief is lowered.

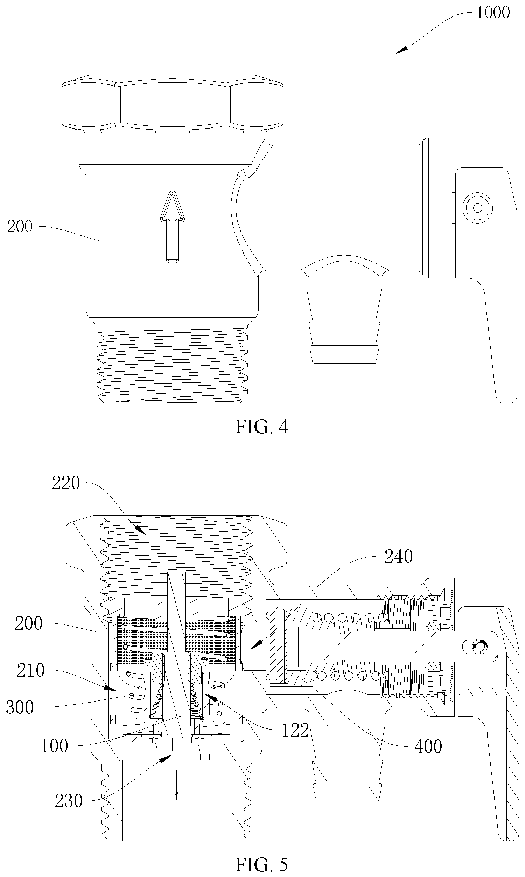

As shown in FIG. 5, the arrows indicate a pressure relief flow direction of a fluid. When the pressure in the system is greater than the safety threshold, the fluid can flow into the internal relief channel 122 from the peripheral wall of the cylinder 12 to optimize the pressure relief flow direction of the fluid. By changing an inlet direction of an internal relief fluid, a pressure and a flow rate of the internal relief water are relieved, and the flow-induced noise caused by an internal relief discrete pressure is changed. Further, the noise of the safety valve 1000 during its pressure relief is lowered.

Referring to FIG. 2, further, the valve spool 20 passes through the cylinder 12, the limit member 40 is disposed at another end of the cylinder 12 and configured to block at least part of the other end of the cylinder 12. Exemplarily, the valve spool 20 may pass through the cylinder 12 from a lower end of the cylinder 12, facilitating the valve spool 20 to close or open the pressure relief orifice 11. The limit member 40 can limit a position of the valve spool 20 from an upper end of the cylinder 12, facilitating the mounting of the internal relief valve core 100. Furthermore, the upper end of the cylinder 12 can be easily sealed through the limit member 40, allowing the internal relief fluid to flow into the internal relief channel 122 from the peripheral wall of the cylinder 12, thus optimizing the pressure relief flow direction of the fluid.

In some embodiments of the present invention, the cylinder 12 has a plurality of internal relief channels 122 formed at the peripheral wall of the cylinder 12. When the system pressure is greater than the safe threshold, the pressure can be relieved through the plurality of internal relief channels 122, thereby improving pressure relief efficiency of the internal relief valve core 100.

In conjunction with the foregoing, optionally, referring to FIG. 3, the valve seat 10 comprises a cylinder 12 and an end plate 13; the valve spool 20 comprises a valve stem 21 and a valve disc 22; and the internal relief valve core 100 further comprises a buffer 50 connected between the end plate 13 and the valve disc 22. When the pressure relief orifice 11 is closed by the valve spool 20, it can prevent noise induced by collision between the valve disc 22 and the end plate 13, and reduce wear between the valve disc 22 and the end plate 13.

In addition, in the related art, the safety valve 1000 may be internally provided with a filter screen. During an axial movement of the valve spool 20, a weak constraint is imposed on the valve spool 20 by a through hole of a filter screen fixing member. When there is circumferential vibration during the movement of the valve spool 20, a valve spool 20 vibrates and collides with the filter screen fixing member, inducing vibration noise. By providing the aforementioned internal relief valve core 100, the valve spool 20 is guided to move along the axis direction of the pressure relief orifice 11 through the limit member 40, which can prevent the valve spool 20 from colliding with the filter screen fixing member during its movement, thus lowering the noise of the safety valve 1000 during its pressure relief.

Referring to FIGS. 4 and 5, the present invention also provides a safety valve 1000. The safety valve 1000 comprises a valve body 200 and the aforementioned internal relief valve core 100. The valve body 200 has an internal relief chamber 210, and a connection port 220 and an internal relief port 230 that are in communication with the internal relief chamber 210. The internal relief valve core 100 is disposed in the internal relief chamber 210 and is configured to bring the connection port 220 and the internal relief port 230 to be in communication with each other or to isolate the connection port 220 and the internal relief port 230 from each other. Exemplarily, the connection port 220 may be connected to an inner tank of a water heater. When a pressure of the inner tank is greater than a safety threshold, the pressure of the fluid can drive the internal relief valve core 100 to move to bring the connection port 220 and the internal relief port 230 to be in communication with each other. As a result, an excess pressure of the inner tank can be relieved through the internal relief port 230, thereby improving use safety of the inner tank. When pressure relief is not required, the internal relief valve core 100 can isolate the connection port 220 and the internal relief port 230 from each other.

The safety valve 1000 further comprises a second reset member 300. The second reset member 300 has an elastic force that drives the internal relief valve core 100 to close the internal relief port 230. In an embodiment, when the system pressure is smaller than or equal to the safety threshold, that is, when a system pressure value is normal, the second reset member 300 can drive the internal relief valve core 100 to close the internal relief port 230. In this case, the safety valve 1000 may be in a closed and sealed state to prevent a medium in the system from flowing out. When the system pressure is greater than the safe threshold, the system pressure overcomes the elastic force of the second reset member 300 to drive the internal relief valve core 100 to open the internal relief port 230, to release the system pressure through the internal relief port 230. Exemplarily, the second reset member 300 may be a spring.

Furthermore, the valve body 200 further has an external relief port 240 in communication with the internal relief chamber 210, and the safety valve 1000 further comprises an external relief valve core 400 configured to open or close the external relief port 240. When the external relief port 240 is opened by the external relief valve core 400, the pressure in the system can be relieved to an external environment, thus improving operating stability of the system. Exemplarily, the external relief port 240 may be connected to an external drain pipe. An excess pressure from the system can be relieved through the external relief port 240 when the system pressure is greater than the safe threshold.

The present invention also provides a water heater. The water heater comprises an inner tank and the aforementioned safety valve 1000. The inner tank has a water storage chamber and a water inlet in communication with the water storage chamber. The connection port 220 is connected to the water inlet. By providing the aforementioned safety valve 1000, noise generated by the water heater during its pressure relief can be reduced.

The various embodiments/implementations of the present invention can be combined with each other without creating contradictions.

In the description of the present invention, it is to be understood that, terms such as "center", "longitudinal", "lateral", "length", "width", "thickness", "over", "below", "front", "back", "left", "right", "vertical", "horizontal", "top", "bottom", "in", "out", "clockwise", "anticlockwise", "axial", "radial" and "circumference" refer to the directions and location relations which are the directions and location relations illustrated in the drawings, and for describing the present invention and for describing in simple, and which are not intended to indicate or imply that the device or the elements are disposed to locate at the specific directions or are structured and performed in the specific directions, which could not to be understood to the limitation of the present invention.

In addition, the terms such as "first" and "second" are used herein for purposes of description and are not intended to indicate or imply relative importance, or to implicitly show the number of indicated technical features. Thus, the feature defined with "first" and "second" may comprise at least one feature. In the description of the present invention, "a plurality of" means at least two, for example, two or three, unless specified otherwise.

In the present invention, unless specified or limited otherwise, the terms "mounted," "connected," "coupled" and "fixed" are understood broadly, such as fixed, detachable mountings, connections and couplings or integrated, and may be direct and via media indirect mountings, connections, and couplings, and also may be inner mountings, connections and couplings of two components or interaction relations between two components. For those skilled in the art, the specific meaning of the above-mentioned terms in the embodiments of the present invention can be understood according to specific circumstances.

In the present invention, unless specified or limited otherwise, the first characteristic is "on" or "under" the second characteristic refers to the first characteristic and the second characteristic may be direct or via media indirect contact. And, the first characteristic is "on", "above", "over" the second characteristic may refer to the first characteristic is right over the second characteristic or is diagonal above the second characteristic, or just refer to the horizontal height of the first characteristic is higher than the horizontal height of the second characteristic. The first characteristic is "below" or "under" the second characteristic may refer to the first characteristic is right below the second characteristic or is diagonal under the second characteristic, or just refer to the horizontal height of the first characteristic is lower than the horizontal height of the second characteristic.

Reference throughout this specification to "an embodiment", "some embodiments", "an example", "a specific example", or "some examples" means that a particular feature, structure, material, or characteristic described in connection with the embodiment or example is comprised in at least one embodiment or example of the present invention. The appearances of the above phrases in various places throughout this specification are not necessarily referring to the same embodiment or example of the present invention. Furthermore, the particular features, structures, materials, or characteristics may be combined in any suitable manner in one or more embodiments or examples. In addition, different embodiments or examples and features of different embodiments or examples described in the specification may be combined by those skilled in the art without mutual contradiction.

Although embodiments of the present invention have been shown and described above, it should be understood that above embodiments are merely illustrative and cannot be construed as limitations of the present invention. Those skilled in the art can make changes, alternatives, and modifications to these embodiments without departing from spirit, principles and scope of the present invention.

## Claims

1. An internal relief valve core of a safety valve, the internal relief valve core comprising:
a valve seat having a pressure relief orifice;
a valve spool movable along an axis of the pressure relief orifice to open or close the pressure relief orifice;
a first reset member having an elastic force that drives the valve spool to close the pressure relief orifice; and
a limit member configured to guide the valve spool to move along the axis of the pressure relief orifice.

2. The internal relief valve core according to claim 1, wherein the limit member is connected to the valve spool and slidably engaged with the valve seat along the axis of the pressure relief orifice.

3. The internal relief valve core according to claim 2, wherein the valve seat comprises a cylinder extending along the axis of the pressure relief orifice, the pressure relief orifice being formed at an inner side of an end of the cylinder, and the limit member being movably disposed in the cylinder in an axial direction.

4. The internal relief valve core according to claim 3, wherein:
the cylinder has an inner circumferential surface comprising a first guide surface; and
the limit member has an outer circumferential surface comprising a second guide surface, the second guide surface being movably disposed at an inner side of the first guide surface along the axis of the pressure relief orifice, wherein:
the first guide surface is a non-circular cylindrical surface, and the second guide surface is a non-circular cylindrical surface adapted to the first guide surface; or
the first guide surface is a polygonal cylindrical surface, and the second guide surface is a polygonal cylindrical surface adapted to the first guide surface; or
a gap between the first guide surface and the second guide surface is smaller than or equal to 1 mm; or
the first guide surface is disposed at another end of the cylinder.

5. The internal relief valve core according to claim 3 or 4, wherein the limit member comprises a positioning protrusion disposed at an outer side of the cylinder, the positioning protrusion protruding from an inner circumferential surface of the cylinder and being opposite to an other end of the cylinder in an axial direction of the pressure relief orifice.

6. The internal relief valve core according to any one of claims 2 to 5, wherein:
the limit member is threadedly connected to the valve spool; and/or
the limit member is in clearance fit with the valve seat; and/or
the limit member is connected to the valve seat by a key.

7. The internal relief valve core according to any one of claims 1 to 6, wherein:
the limit member is connected to the valve seat, and the valve spool is slidably engaged with the limit member along the axis of the pressure relief orifice; or
the limit member is disposed between the valve seat and the valve spool, and the limit member is slidably engaged with the valve seat and the valve spool along the axis of the pressure relief orifice.

8. The internal relief valve core according to any one of claims 1 to 7, wherein the valve spool comprises a valve stem and a valve disc, wherein the valve disc is disposed at a side of the pressure relief orifice, wherein the valve stem is connected to the valve disc and passes through the pressure relief orifice and the valve seat, and wherein the limit member cooperates with the valve stem and the valve seat to guide a movement of the valve spool.

9. The internal relief valve core according to any one of claims 1 to 8, wherein the valve seat comprises a cylinder and an end plate, wherein the end plate covers an end of the cylinder, wherein the pressure relief orifice is formed at the end plate, and wherein a peripheral wall of the cylinder has an internal relief channel through which an internal space of the cylinder is in communication with the pressure relief orifice.

10. The internal relief valve core according to claim 9, wherein:
the valve spool passes through the cylinder, and the limit member is disposed at an other end of the cylinder and configured to block at least part of the other end of the cylinder; and/or
the cylinder has a plurality of internal relief channels formed at the peripheral wall of the cylinder.

11. A safety valve, comprising:
a valve body having an internal relief chamber, and a connection port and an internal relief port that are in communication with the internal relief chamber;
an internal relief valve core according to any one of claims 1 to 10, the internal relief valve core being disposed in the internal relief chamber, and the internal relief valve core being configured to bring the connection port and the internal relief port to be in communication with each other or to isolate the connection port and the internal relief port from each other; and
a second reset member having an elastic force that drives the internal relief valve core to close the internal relief port.

12. The safety valve according to claim 11, wherein:
the valve body further has an external relief port in communication with the internal relief chamber; and
the safety valve further comprises an external relief valve core configured to open or close the external relief port.

13. A water heater, comprising:
an inner tank having a water storage chamber and a water inlet in communication with the water storage chamber; and
a safety valve according to claim 11 or 12, wherein a connection port is connected to the water inlet.
